# EUROPEAN PATENT APPLICATION

(11) **EP 3 872 775 A1**
(43) Date of publication of application: **01.09.2021**
(21) Application number: 21153294.0
(22) Date of filing: 25.01.2021
(51) Int. Cl.: G07F 9/10, G07F 11/62, G07F 17/12, F24D 13/04, G06Q 20/32, G06Q 20/40, G06Q 10/02, G06Q 10/08

(54) **A METHOD AND SYSTEM FOR CONTROLLING A STORAGE APPARATUS FOR GOODS**

(30) Priority: 28.02.2020 GB 202002870
(71) Applicant: Illinois Tool Works INC., Glenview, IL 60025 (US)
(72) Inventor: CARTWRIGHT, Kevin, Smethwick, West Midlands B66 2LP (GB)
(74) Representative: HGF

(57) **Abstract**

There is provided a computer-implemented method for use with a storage apparatus, the storage apparatus comprising a plurality of lockable storage compartments, a memory unit for storing data and a communication unit for wireless communication according to a local wireless communication protocol, the method comprising: receiving an order for goods from a computing device associated with a user, wherein receiving the order comprises receiving an identifier associated with the storage apparatus; receiving, at the storage apparatus associated with the identifier, digital media from a computer server; storing the digital media at the memory unit of the storage apparatus associated with the identifier; transmitting connection information to a mobile device associated with the user, wherein the connection information is for establishing a wireless communication connection between the communication unit of the storage apparatus associated with the identifier and the mobile device associated with the user; establishing, in dependence on the connection information, the wireless communication connection between the communication unit of the storage apparatus associated with the identifier and the mobile device; and transmitting, via the wireless communication connection, the digital media from the storage apparatus to the mobile device for displaying the digital media on a display device thereof.

## Description

The present invention relates to a storage apparatus, particularly a locker system, particularly although not exclusively, to a multi-user locker system for the storage of goods.

### Background

Locker systems are used for storage of items, such as goods, awaiting collection by a user. Refrigerated locker systems, where lockers are cooled to one or more predetermined temperatures, have been used in a wide range of applications. For example, WO2015114331 (to Illinois Tool Works Inc.) which teaches a temperature controlled lockable storage apparatus wherein the temperature of compartments within a locker is independently controllable to provide either a chilled or frozen temperature. Access to the lockable storage spaces is governed by an access control module which communicates with a central control system at a delivery centre such as a supermarket via a communication module and grants access to the lockable storage spaces for authorised users. When a user a collects goods from the lockable storage spaces, the operator of the delivery centre may wish to communicate specific information directly to the user.

It is an object of embodiments of the invention to at least mitigate one or more of the problems of the prior art.

### Summary of the Invention

In an embodiment of the invention, there is provided a computer-implemented method for use with a storage apparatus, the storage apparatus comprising a plurality of lockable storage compartments, a memory unit for storing data and a communication unit for wireless communication according to a local wireless communication protocol, the method comprising: receiving an order for goods from a computing device associated with a user, wherein receiving the order comprises receiving an identifier associated with the storage apparatus; receiving, at the storage apparatus associated with the identifier, digital media from a computer server; storing the digital media at the memory unit of the storage apparatus associated with the identifier; transmitting connection information to a mobile device associated with the user, wherein the connection information is for establishing a wireless communication connection between the communication unit of the storage apparatus associated with the identifier and the mobile device associated with the user; establishing, in dependence on the connection information, the wireless communication connection between the communication unit of the storage apparatus associated with the identifier and the mobile device; and transmitting, via the wireless communication connection, the digital media from the storage apparatus to the mobile device for displaying the digital media on a display device thereof.

Optionally, the storage apparatus is selected by the user.

In some embodiments, the local wireless communication protocol may be a Wi-Fi communication protocol.

Optionally, the connection information may comprise an SSID and a passcode.

In some embodiments, the mobile device may be the computing device.

In another embodiment of the invention, a system comprising: a storage apparatus associated with an identifier and comprising a plurality of lockable storage compartments, a memory unit and a communication unit for wireless communication according to a local wireless communication protocol, a computing device associated with a user, a mobile device associated with the user and comprising a display device, and a computer server configured to: receive an order for goods from the computing device, wherein receiving the order comprises receiving the identifier associated with the storage apparatus; and transmit connection information to the mobile device, wherein the connection information is for establishing a connection between the communication unit of the storage apparatus associated with the identifier and the mobile device, the storage apparatus configured to: receive digital media from the computer server; store the digital media on the memory unit; establish, in dependence on the connection information, the wireless communication connection between the communication unit and the mobile device; and when the wireless communication connection is established, transmit the digital media to the mobile device for displaying the digital media on a display device thereof.

There is also provided computer software which, when executed, is arranged to perform a method as described above.

### Brief Description of the Drawings

Embodiments of the invention will now be described by way of example only, with reference to the accompanying figures, in which:
Figure 1 shows a schematic view of a locker bank illustrating two users contemporaneously collecting delivered items;
Figure 2 shows a schematic perspective view of a locker bank;
Figure 3 shows a schematic view of a storage space within a locker bank;
Figure 4 shows a block diagram showing the communication between the central control system, access control system, and the storage installation.
Figure 5 shows a schematic view of a locker bank comprising personal communications devices as guidance means;
Figure 6 shows a schematic view of a Delivery Driver App; a mobile app primarily for couriers;
Figure 7 shows a schematic view of a Consumer App; a mobile app primarily for consumers;
Figure 8 shows a system according to an embodiment of the invention;
Figure 9 shows a system according to an embodiment of the invention; and
Figure 10 illustrates a flowchart showing a method according to an embodiment of the invention.

### Detailed Description of Embodiments of the Invention

A distribution network is a group of connected storage facilities and transportation systems that receive goods and then deliver them to consumers.

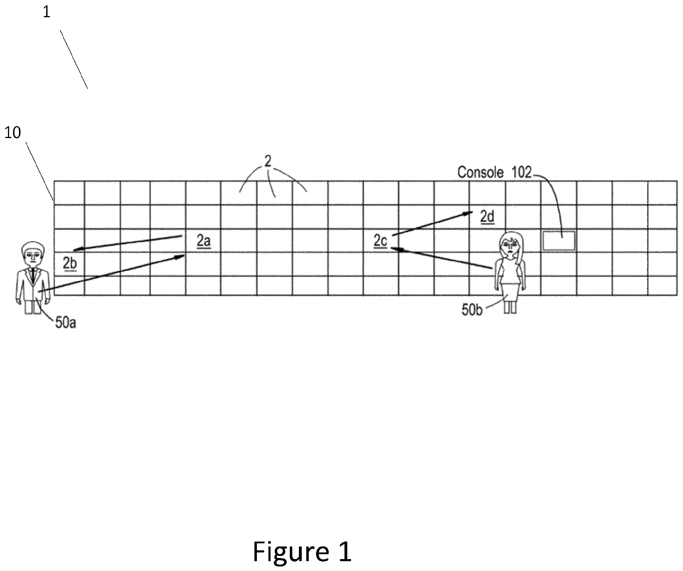

Figure 1 illustrates a distribution network comprising a storage installation 1. The storage installation 1 at a given collection site may comprise a plurality of lockable storage spaces 2, arranged either in a single locker bank 10 on a given footprint at the collection site, or in two or more separate locker banks 10 typically grouped close to one another on a given footprint at the collection site. At least one user 50 is guided to their allocated lockable storage space(s) 2, more specifically a subset of a plurality of lockable storage spaces 2.

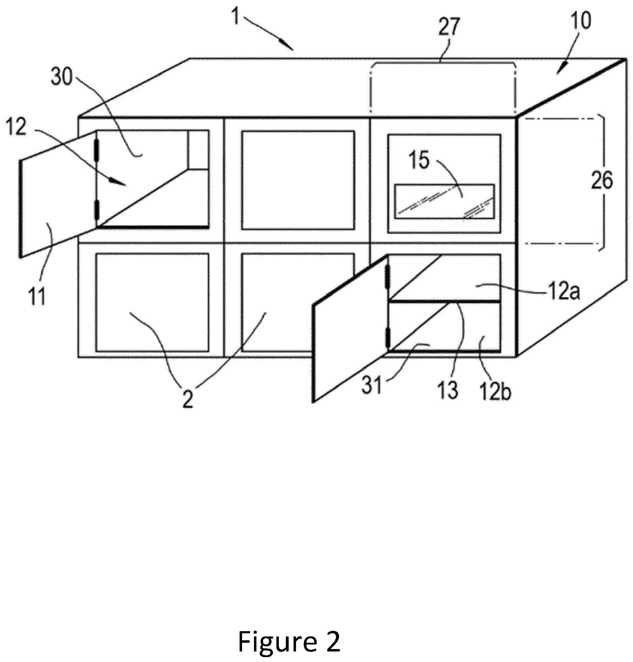

Fig. 2 illustrates a single locker bank 10. Each storage space 2 comprises at least one compartment 12. Additional compartments 12 can be created within a storage space 2 using at least one horizontal, vertical and/or diagonal divider 13 to separate the compartments. The compartments 12 within a storage space 2 may be equal or different in volume and/or shape. Typically, the storage spaces 2 are lockers, i.e. each having a respective lockable door 11; but may also comprise drawers as some items, such as round items, may roll out when a door 11 is opened. The door 11 is typically mounted to the locker bank 10 by a hinge or pivot 21, though any other suitable mounting arrangements, e.g. sliding doors or doors with compound articulations, may also be used; throughout or in any suitable combination. The storage spaces 2 need not comprise a conventional door 11, but instead may have an inner member and an outer member which are moveable or slidable with respect to one another about or along a common axis. Storage spaces 2 may be equal to each other in size and/or volume, or may be different to each other in size and/or volume. Typically, the storage spaces 2 are generally box shaped (rectangular/square parallelepiped-like volumes).

In the case of more conventional generally box-shaped storage spaces 2, these may be joined together side by side in the or each locker bank 10, and usually share side walls 30. The plurality of lockable storage spaces 2 may be positioned such that they are adjacent to one another. For example, a storage installation 1 may comprise one locker bank 10, wherein a locker bank 10 comprises a plurality of storage spaces 2.

Alternatively, a storage installation 1 comprises two or more locker banks 10 wherein each locker bank 10 is placed proximate to another.

Fig. 2 illustrates a locker bank 10 with six storage spaces 2; however, a locker bank 10 can be arranged in a multitude of ways. Preferably, a locker bank 10 has two or more storage spaces 2 wherein the two or more storage spaces 2 are arranged in at least one row 26 and/or at least one column 27 in locker bank.

One or more of the storage spaces 2 in the subset allocated to said at least one user may store goods requiring a particular storage condition, such as a temperature. The user 50 may be a consumer or a courier (delivery person). A consumer may collect goods from a plurality of lockable storage spaces 2 allocated to them. A courier may deliver goods to a plurality of lockable storage spaces 2 allocated to them. Optionally, a consumer may deliver goods to a plurality of lockable storage spaces 2, i.e. in the case of returning the goods. Optionally, a courier may collect goods from a plurality of lockable storage spaces 2 which are returned or uncollected by the consumer.

In embodiments of the present invention, the one or more of the lockable storage spaces 2 store goods which require different storage conditions, in particular different temperatures. The different temperatures may include a frozen temperature, chilled temperature and controlled ambient conditions.

The chilled temperature represents the temperature range for storage of groceries such as milk and yogurt, etc. and covers a range between substantially 0 degrees Celsius to substantially 4 °C. The frozen temperature represents the temperature range for storage of frozen groceries such as ice cream and frozen food. For the purpose of the present invention, the frozen temperature covers a range between substantially -25 °C to substantially 0 °C, more preferably between substantially -21 °C to substantially -18 °C. Preferably, the temperature of each of the one or more compartments is independently controllable to provide any one of ambient or chilled or frozen temperature. The ambient temperature represents the temperature range for storage of typical groceries such as chocolate or dry goods. For the purpose of the present invention, ambient temperature covers a range between substantially 4 °C to substantially 21 °C. For the purpose of this invention and all the prior applications, the term "ambient temperature" is construed to mean "room temperature" or more appropriately "controlled ambient temperature". It does not refer to the actual air temperature of the surrounding environment, for example the sub-zero temperature experienced during the winter months; rather "ambient temperature" means a temperature range suitable for storing goods that do not require refrigerated storage to remain in saleable condition.

Each compartment 12, 12a, 12b of the storage space 2 may comprise at least one variable which is independently controllable, wherein the variable may be temperature, humidity, other atmospheric composition and/or pressure, for example. A subset of the compartments 12, 12a, 12b within a storage installation 1 can for example be in controlled to provide a selectable specified condition whilst another subset of the compartments 12, 12a, 12b within the same storage installation 1 can for example be controlled to provide another selectable specified condition, wherein the selectable specified condition comprises temperature, humidity, other atmospheric condition or composition, pressure etc. Therefore, a user 50 having ordered a variety of goods requiring different storage conditions, e.g. frozen goods and chilled goods, may need to go to two or more separate storage spaces 2 within the storage installation 1 to collect their goods as they will not necessarily be stored together within the same storage space 12. A subset within a storage installation 1 may comprise storage spaces 2 from separate locker banks 10.

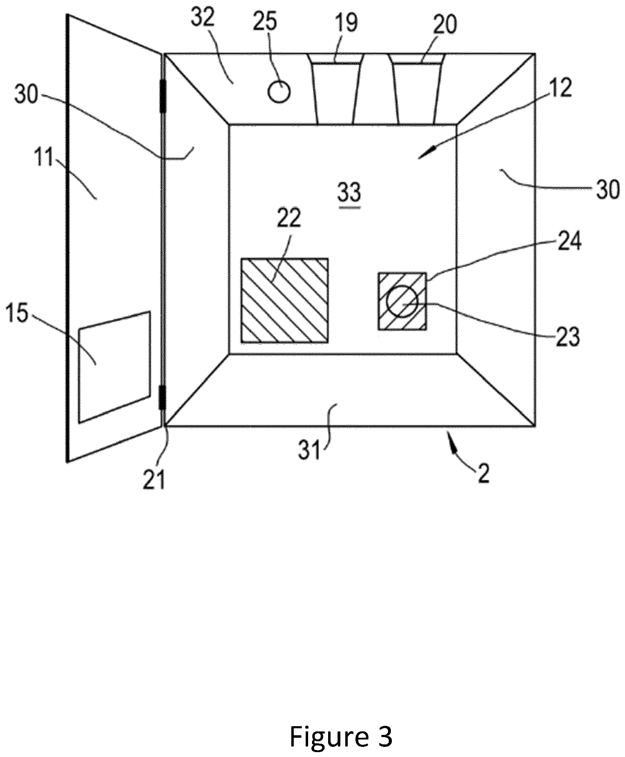

Figure 3 illustrates a compartment 12 which may comprise a side wall 30, a lower wall 31, an upper wall 32 and a rear wall 33. In order to prevent items contained within a compartment 12 of storage space 2 from rolling or falling out of the compartment 12 upon opening the door 11 to the storage space 2, the lower wall 31 of at least one storage space may be tilted such that it is declined between the edge nearest the door 11 towards the rear wall 33. The angle of decline is preferably between 0 and 10 degrees from the horizontal plane, more preferably between 0 and 5 degrees from the horizontal plane. Alternatively or additionally a horizontally configured divider 13 which is placed in the storage space 2 to create two compartments 12a, 12b (see Figure 2) may also be declined as described above, to prevent items from falling or rolling out of the upper compartment 12a created by the divider 13. Additionally or alternatively the lower wall 31 and/or the horizontal divider may comprise a lip or threshold adjacent the opening, for a similar purpose.

Fig. 3 shows an internal view of a storage space 2 with one compartment 12. In this exemplary embodiment, the compartment comprises an air conditioner or dehumidifier 22 for dehumidifying the compartment 12. The storage space 2 may comprise an inlet/outlet 23 for a vacuum pump in order to allow control of the pressure within the storage space 2. The compartment 12 may comprise interior illumination such as from a light source 20 facilitating collection and inspection of stored items. The light source 20 may be switched on when the door 11 opened or unlocked, and the light source 20 may be switched off when the door 11 is closed or locked. Optionally, the light source 20 may be switched on or off regardless of the state of the door 11 or lock. In case of a fire within at least one compartment 12, the compartment 12 may be equipped with an active fire protection system 19 such as a fire sprinkler system.

The door 11 may comprise a window 15 such that light can be transmitted from the surroundings to within the at least one compartment 12 of the storage space 2. This can be useful if the item(s) in the compartment 12 require light, e.g. plants. The window may be transparent or translucent. The window 26 may be a smart window such that it can dim or undim by using electrochromic glass which can change from light to dark (i.e. transparent/translucent to more or completely opaque), and back again. The change from light to dark of the electrochromic glass may occur on locking or unlocking the door 11 of the storage space 2, or vice versa. In case the goods stored in the compartment 12 comprises a plant, a plant watering system can be fitted into the compartment 12 such that the plant is watered at set intervals or watering can be controlled manually, controlled remotely or programmed.

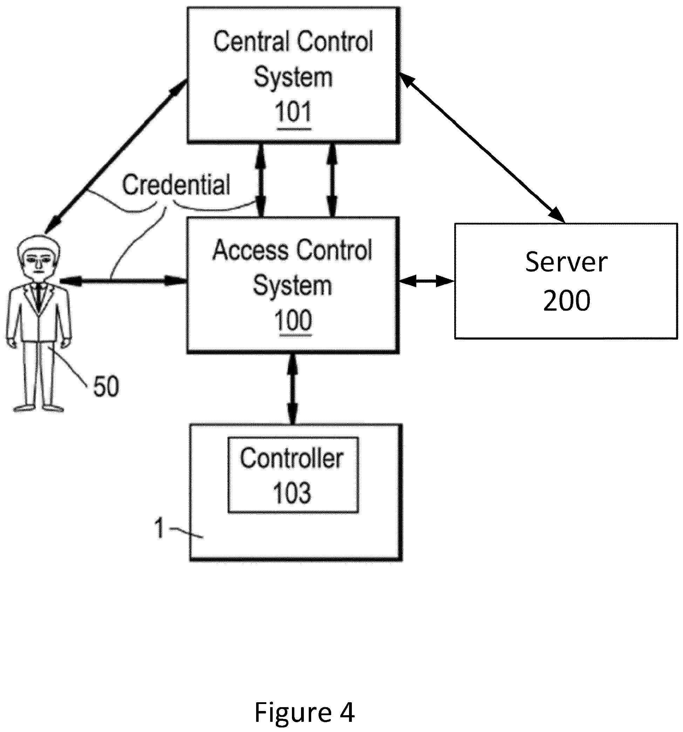

Figure 4 illustrates a schematic control system for the distribution network.

A central control system 101 within the distribution network may allocate the lockable storage spaces 2 for goods which have been ordered, e.g. online, by a user 50. Based on status information of the lockable storage spaces 2, the central control system 101 may allocate at least one suitable vacant or available storage space 2 for goods deliveries or consignments. The user 50 is allocated one or more storage spaces 2 depending on the condition-requirements of the goods ordered for delivery to a collection point, e.g. chilled, frozen and/or controlled ambient. The central control system 101 may be coupled to an access control system 100, as will be described.

An order can be placed by a user 50 such that the goods ordered will be delivered to at least one of the lockable storage spaces 2, i.e. a subset of the plurality of lockable storage spaces 2, located at a collection site. Once a user 50 has successfully placed an order, the allocation of the subset of a plurality of lockable storage spaces 2 allocated to said user 50 will be stored in a database along with, but not limited to, the user's identity and a list of the ordered goods. The database may be stored on a data storage device wherein the data storage device may be located in the central control system 101. The data storage device may comprise cloud storage 240 or be located in a supermarket or at a delivery centre, or locally within the storage installation 1. The database is coupled to the access control system 100 by way of the central control system.

The lockable door 11 of each storage space 2 is actuated by the access control system 100 to permit a user 50 to gain access to at least one of a subset of the plurality of lockable storage spaces 2. The access control system 100 comprises an access control processor. The access control processor can be any processing device known in the art. Typical examples include but are not limited to a microprocessor. The processor can be communicatively coupled to computer readable media such as a memory device. Different access control systems 100 commonly known in the art are permissible in the present invention. Commonly known access control systems are through the use of barcodes or machine readable media.

A guidance means is configured to guide the user 50 to the allocated storage space 2 once the user 50 has been granted access to their respective subset of allocated storage spaces 2 by the access control system 100. The guidance means is configured to contemporaneously or concurrently guide two or more users to at least part of their respective subset of lockable storage spaces 2. In some embodiments, the access control system 100 may comprise the guidance means, and the guidance means may be operable by the access control processor. In some embodiments, the guidance means may be a guidance device of a user as will be explained.

In one example as shown in Fig. 1, a first user 50a is allocated storage spaces 2a and 2b and a second user 50b is allocated storage spaces 2c and 2d. The guidance means of the present invention can guide the first user 50a to storage space 2a in a variety of ways, examples of which are detailed below. Once the user 50a has collected their ordered goods from the storage space 2a, the guidance means will then direct the user 50a to their second allocated storage space 2b. Alternatively, the guidance means may provide the user 50a with an indication of a location sequence of the subset of lockable storage spaces 2a and 2b at the same time, i.e. upon user registration at the locker bank 10. For at least some of the time during which the first user 50a is being guided for collection of their ordered goods from their allocated storage spaces 2a, 2b, the disclosed storage space access control arrangements permit the second user 50b (and possibly still further users, not shown) to be guided for collection of their goods from their allocated storage spaces (2c, 2d in the case of second user 50b) too.

In order to collect the ordered goods from the subset of a plurality of lockable storage space(s) 2, the user 50 must first confirm that they are in fact the same user 50 that made the order or have been authorised by said user 50 to collect the goods. The access control system 100 grants access to the subset of the lockable storage space 2 allocated to a user 50 provided that it identifies a user based on a credential, and this user identity via the credential matches the user identity stored in the database. This is also referred to as user registration.

The credential may include any one of, but is not limited to, a machine-readable medium such as a barcode or a passcode, a contact payment card, a contactless payment card, a contact smart card, a contactless smart card, an identity document such as a passport or a driver's license, a biometric input or a personal communications device such as a smartphone or a tablet. The biometric input may include, but is not limited to, at least one of a fingerprint, face recognition, hand geometry, iris recognition, retina, palm veins, DNA, palm print, and odour/scent. Geolocation can be used to determine that a credential is in a given place (e.g. in the vicinity of a bank of storage spaces) and can therefore be used to verify a credential, such that, upon user arrival at the collection site, the access control system 100 grants access to the subset of lockable storage spaces 2. Other additional or alternative methods for credential verification are described below. In the case of sensitive data, such as biometric data, e.g. a fingerprint or face, the biometric data is stored in the enclave of the CPU of a user's device used to connect to the access control system 100. The biometric data may be only stored locally to a user's device and not stored anywhere else in the distribution network. Therefore, the access control system 100 may rely on the user's device to authenticate the biometric data during user registration. The user's device may be a personal computer or a personal communication device. In some cases, when a user registers for biometric authentication, a RSA encrypted Public/Private key which is stored and encrypted on a hardware chip in a user's device is generated. The only way that the RSA Public/Private key can be accessed by the access control system 100 is when the operating system of the user's device authenticates the user through its biometric scanner (e.g. fingerprint scanner). The private key remains on the user's device trust zone which is not accessible by software, and a server of the distribution network has the public key. When signing in, a "signature" is created by the trust zone using the private key. The signature is sent to the server where it verifies its authenticity by comparing to the public key. This allows the user 50 to register. The credential may be presented by the user 50 to the access control system 100. In some cases, where the access control system 100 is located in the storage installation 1, the access control system 100 may comprise at least one access control console 102 as illustrated in Figure 1. The at least one console 102 may comprise a user interaction means and/or means to read/input the credential, e.g. a fingerprint reader, retina recognition or low power wireless communication protocols, e.g. Bluetooth®, Zigbee® etc. The user interaction means may comprise at least one of a display screen and/or a loudspeaker and/or input device and/or graphical user interface and/or a microphone. In the case that the console comprises a display screen, the display screen may be arranged in a portrait or a landscape orientation. The user 50 may register by presenting their credential at the at least one console 102. The access control system 100 compares the credential data with the information stored in the database; if there is a match, access to a subset of the plurality of lockable storage spaces 2 will be granted to the user 50, otherwise access will be denied. The advantage of this is that by having more than one console 102 per locker bank 10, two or more users can contemporaneously register to be granted access to their respective subsets of lockable storage spaces 2.

Once the user 50 is granted access to their respective subset, at least one of the guidance means may be engaged to guide the user 50 to each storage space 2.

The access control system 100 is coupled to a controller 103 located in the storage installation 1 which can control the lock status of each storage space 2. The first storage space 2 allocated to said user is unlocked or opened and the user 50 retrieves their goods from the first storage space. Acknowledgement that the goods have been retrieved from the first storage space storage space 2 can be determined by the user closing the door or the storage space senses that goods have been removed from the storage space, e.g. senses a change in weight (load cell), interruption in light, motion sensor etc. Upon closing the first storage space 2, the controller 103 may lock the first storage space 2, and the guidance means will communicate to the user 50 the location of the subsequent storage space 2 in their subset.

The access control system 100 may communicate with at least one personal communications device 230 of a user 50. The at least one personal communications device may be utilised for user registration, or as a guidance means, or both, as will be explained.

Examples of a personal communications device 230 are a cellular phone, tablet, smart phone, smart watch, laptop etc. The communication between the access control system 100 to the user's personal communications device 230 may be wireless means such as email, Bluetooth®, WiFi, Zigbee, induction wireless, ultra Wideband (UWB), infrared wireless, near-field communication (NFC) and/or radio-frequency identification (RFID) etc. The user 50 may present a credential via their personal communications device 230, and if it matches the identity of a user 50 stored in the database that was allocated a subset of a plurality of lockable storage spaces 2, may be granted access to their respective subset of lockable storage spaces 2. Therefore, a user 50 can be granted access to their respective subset of a plurality of lockable storage spaces 2.

The distribution network comprises a server 200. The server 200 may be located in or proximate to the storage installation 1, or may be remote from the storage installation 1. An application may be stored in the server 200, and this application may communicate with a mobile app on the user's personal communications device 230. A user may set up an account with a retailer and provide details of preferred collection sites which could be close to home or work as well as providing personal details such as name, address, payment details, e.g. bank or Paypal®. The personal details of the user are stored in a database which could be located in the server 200 of the distribution network and is managed by the central control system 101. The central control system 101 may also link to a delivery system which manages delivery of goods to a user's preferred collection sites according to their preferences in their account. A user having an account with the central control system 101 can log onto a website associated with the central control system. The website has a link to at least one retailer and/or delivery system associated with the central control system. Access to the website can be through the user's personal communications device, e.g. via a mobile app.

The application in the server 200 may communicate with the access control system 100 such that the user 50 can register for access to their respective subset of a plurality of lockable storage spaces, and also be guided by their mobile app on their personal communications device 230.

Therefore, once a user 50 has registered and been granted access by the access control system 100, at least part of the location sequence may be communicated to the user 50 via the mobile app on the personal communications device 230. Alternatively, the application in the server 200 delivers at least part of the location sequence to the user's personal communication device 230 by email or SMS, or other means, other than via the mobile app. Alternatively, the personal communications device 230 is only used for user registration, and the user 50 is guided to their respective subset of a plurality of lockable storage spaces 2 by at least one other guidance means, as will be described.

Alternatively, the user registration is completed via the at least one console, and the user 50 is guided to their respective subset of lockable storage spaces 2 by their personal communications device 230. In this case, once a user has registered at the console, the console or access control system 100 may communicate to the user's personal communications device 230 the location of the storage space 2, and once the user has retrieved their goods from said storage space 2 (i.e. closed the storage space 2), the console or access control system will again communicate to the user's personal communications device 230 indicating the location of the subsequent storage space. In some cases, the entire location sequence may be communicated to the user by way of the personal communications device 230. The communication may be via at least one wireless, such as Bluetooth, emitter which is located proximate to the storage installation. Alternatively, the communication may be via any wireless means between either the storage installation 1 and the personal communications device 230, or between the server 200 and the personal communications device 230.

The personal communications device 230, having received the location sequence from the access control system 100, may guide the user 50 by any sensory channel of said user 50, or combination of sensory channels of said user 50. For example, the personal communications device may display a visual/graphical guide showing the storage spaces location within the storage installation 1, or display a textual guide which says "4C", or display an augmented reality view. Optionally, or additionally, the personal communications device may playback an auditory guide, for example, different tones depending on the distance the user is from the allocated storage space 2 (i.e. proximity/directional guidance) or synthesised speech whereby the loudspeaker of the device will provide directional and/or instructional guidance (i.e. "left, then forward, then right" and/or "Your next locker is 4C"). Further optionally, the personal communications device 230 may provide haptic feedback for proximity/directional guidance, for example, the device will vibrate when within a pre-determined distance from the allocated storage space 2; and/or guide the user towards the allocated storage space by varying the haptic output depending on proximity to it. Not all of these guidance means by sensory channels need be implemented on a personal communications device; they may optionally be centrally or selectively distributedly displayed or broadcast by suitable display screens and/or loudspeakers and/or any other guidance means disclosed herein and located in or proximate to the storage installation 1.

The access control system 100 may comprise one or more wireless emitters to broadcast guidance instructions to a user's personal communications device 230. The wireless emitter may comprise any common wireless means known in the art such as Bluetooth, Zigbee or wi-fi emitters. The user may pair their personal communications device 230 with the access control system during user registration so as to allow the broadcasts to be announced by their personal communications device 230. This broadcast signal can provide guidance instructions to the user 50 by any sensory channel, as discussed above (e.g. visual/graphical, auditory and/or haptic).

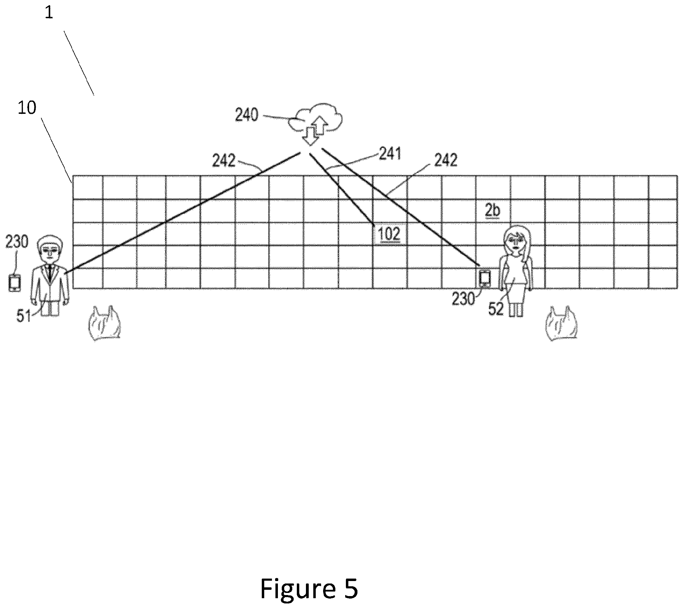

Referring to Fig. 5, when a first user 51 registers with the access control system 100, a processor within the locker bank 10 at the storage installation 1, or even remote from storage installation 1, communicates with the first user's personal communications device 230, which may comprise an application executed thereon. Alternatively or additionally, the locker bank 10 and/or its storage spaces 2, 2a, 2b may comprise communication means 241 in communication with an access control program e.g. running in the cloud 240. The access control program may be processed by the processor in the server 200 of the distribution network or by a separate processor that is remote of the server 200. The cloud 240 may form part of the central control system. The consumer's personal communications device application and the access control program are "linked" by the customer order number or equivalent identifier (which is assigned to the customer when placing the order, and stored in a database wherein the database is located in the distribution network, e.g. in the central control system 101, e.g. stored in the cloud 240) such that the personal communications device 230 and the cloud 240 are in communication via communication means 242. The access control program may communicate to the user 50, by way of the user's personal communication device 230, at least part of the location sequence of said user's respective subset of lockable storage spaces 2 from the cloud 240 via communication means 242. When the user 51 closes the storage space 2a after having collected their ordered goods from the lockable storage space allocated to them, the processor in the locker bank and/or the access control program communicate (via communication means 241) with the user's personal communications device 230 such that the location of the next storage space is communicated to the user 51 and/or the subsequent storage space in the user 51's allocated subset is unlocked and ready for the ordered goods to be collected by the user 51. A second user 52 with an allocated subset of lockable storage spaces which includes storage space 2b may be guided to such a subset by the same means described above for the first user 51, i.e. the first user 51 and second user 52 are contemporaneously (at least partly simultaneously) guided to their respective subsets of lockable storage spaces 2a, 2b. This is discussed in more detail below. Communication means 241 and 242 may be any of email, wi-fi, SMS etc.

As disclosed above, there are two user registration means via the access control system 100; these are through (i) the at least one console 102 or (ii) the personal communications device 230 of the user 50. The guidance means may include at least one of the at least one console, at least one scanner station, a customer information display system, at least one printer, the personal communications device 230 and any of the other guidance means disclosed herein.

The access control system 100 may comprise at least one printer as a form of guidance means. The at least one printer may operate in conjunction with the at least one console 102. Upon registration by way of the access control system 100, the printer may print a note indicating the location sequence of the subset of lockable storage spaces allocated to a user 50. The note may also include a machine readable medium and/or alphanumeric code which may also act as a credential for access to a respective subset of the lockable storage spaces 2. The at least one printer may be positioned in a locker bank 10, preferably proximate to each console 102. Optionally, the access control system 100 may not comprise a printer but a pre-printed note/receipt is provided together with the goods contained by the first allocated lockable storage space of a user's respective subset. The note may comprise a credential for opening any further allocated storage spaces 2 associated with that order.

The access control system 100 may comprise a customer information display system as a form of guidance means. The customer information display system may comprise at least one customer information display panel. Upon registration, by way of the access control system 100, the customer information display system will indicate the location sequence or subsequent storage space 2 of a respective subset of lockable storage spaces 2 to a user 50 via at least one customer information display panel.

The access control system 100 may comprise at least one scanner station as a form of guidance means, whereby, following user registration and retrieving their goods from their first allocated storage space 2, the user 50 then goes to such a scanner station which will communicate to the user 50 the subsequent storage space of their respective subset when the user 50 presents a credential at the scanner station.

Other guidance means may include one or more of: a storage space number display system in which each storage space 2, comprises a storage space number display screen; a light-based display; an optical head-mounted display and/or other head-mounted device; a path projection system comprising at least one projector; or a loudspeaker system. Any guidance means disclosed herein may be used in combination with any other guidance means also disclosed herein. It will become apparent how this is possible, and why it may be advantageous, through this disclosure.

Upon placing the order or during setting-up of an account with the central control system 101 or during user registration with the access control system, the user can select a preferred type of guidance means. This may be advantageous where the user has a physical disability. For example, a visually impaired user may select to be guided by a loudspeaker system and/or haptic feedback and/or a refreshable braille display input device guidance means.

When employing any of the guidance means, the access control system 100 may facilitate the unlocking/opening of subsequent allocated storage spaces 2 when the preceding allocated storage space 2 has had its contents retrieved by the user 50 and the preceding storage space 2 has been closed. The access control system 100 may unlock a subsequent storage space when its location is communicated to the user 50, and lock said storage space 2 when it is closed. Alternatively, the user may be need to manually open/unlock the storage space that they have been guided to. This may involve a user 50 inputting a code to an input device and/or presenting a credential to a scanner/reader to open/unlock the storage space 2 allocated to said user 50.

Access by the access control system 100 to each lockable storage space 2, or a subset of lockable storage spaces 2 allocated to a user 50, is governed by electronically locking/closing and unlocking/opening the storage space 2, upon verification of user identity based on a credential of said user 50. The electronic locking mechanism can be any mechanism known to the person skilled in the art such as an electromagnetic lock ("maglock"), an electronic strike or electronic deadbolts and latches. The access control system 100 may also monitor the status of each storage space 2 and transfers the status information to a server 200. Status information may include, but is not limited to, at least one of temperature information, dehumidifier information, vacuum information, the light source information, occupancy information, compartment size information, window information, fire sprinkler system information, lock information, and alarm condition information.

The access control system 100 may be coupled to a controller 103 located in the storage installation 1 which can control the lock status of each storage space 2, as shown in Fig. 4.

The sequence by which the allocated storage spaces are arranged in the collection sequence or sequences may be determined by employing at least one algorithm to solve the "shortest path problem" or the "travelling salesman problem". Additionally or alternatively, the path may be determined by one or more of a heuristics approach; whether goods stored in particular conditions or having particular characteristics should be collected first or last; a user preference; and the location of other users also collecting their goods from their respective subsets of lockable storage spaces 2, in order to prevent overcrowding.

A benefit of the present invention is that the access control system 100, particularly in response to the guidance means, can facilitate two or more users to contemporaneously or at least partially simultaneously collect their ordered goods from their respective subsets of a plurality of lockable storage spaces 2. In one example, a first user 50a is being guided by the guidance means to a first subset of lockable storage spaces 2 allocated to said first user 50a. In the same example, a second user 50b is contemporaneously guided by the guidance means to a second subset of lockable storage spaces 2 allocated to said second user 50b. This is only made possible by the guidance means detailed above; without such means, each subsequent user 50 must wait for the preceding user 50 to complete the collection of their ordered goods from their respective subset of lockable storage spaces 2, and return to the console 102 (which also may not allow simultaneous or contemporaneous user registration by a plurality of users 50).

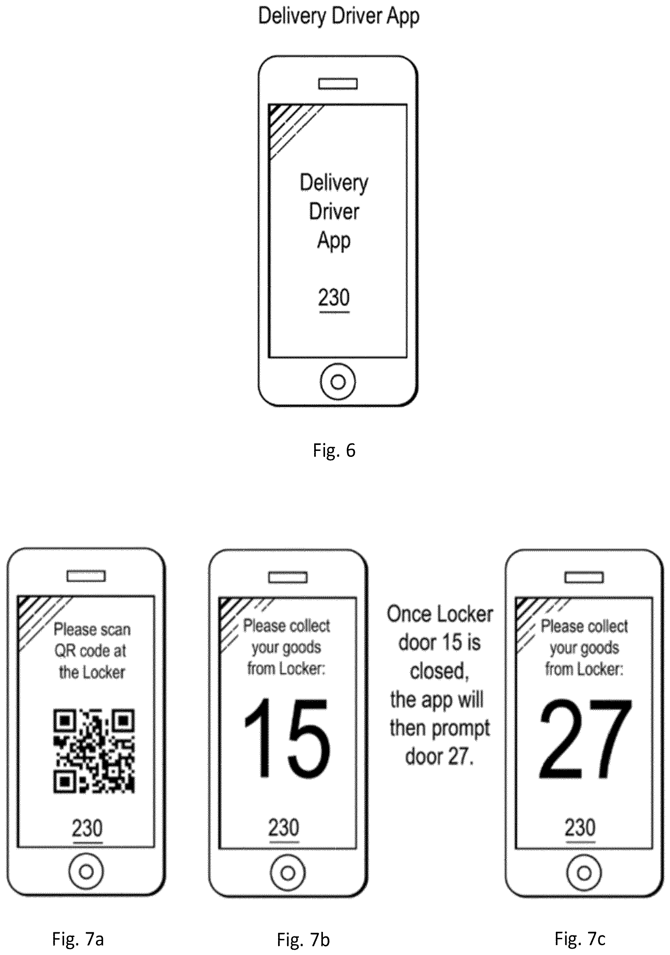

Fig. 6 shows an example of a mobile app for users, in particular the courier or delivery driver, which may execute operably on the personal communications device 230. This mobile app for use by couriers or delivery drivers is referred to as a Delivery Driver App. The Delivery Driver App may register with the access control system (which may be located at the storage installation) by wireless means, such as Bluetooth or Wi-fi. Once the user of the Delivery Driver App is connected to the access control system, the Delivery Driver App may provide a delivery procedure via the personal communications device 230 guiding said user to deliver goods to a subset of lockable storage spaces by at least one guidance means, e.g., but not limited to, any of the guidance means described above.

Fig. 7 shows an example of a mobile app for users, in particular consumers placing and taking delivery of goods orders, on the personal communications device 230. This mobile app for use by consumers is referred to as the Consumer App. The Consumer App may register with the access control system 100 (which may be located at the storage installation) by wireless means, such as Bluetooth or Wi-fi associated with the access control system 100. The Consumer App will navigate the user through the "click and collect" experience. Once a user has registered, such as by scanning a machine-readable medium (Fig. 7a) provided by the Consumer App at an input device, the access control system 100 will consistently "broadcast" both the order number and the next storage space or spaces in the collection sequence. The application will "ignore" the subsequent storage space message if the order number or like identifier does not match that of the user that is using the Consumer App. A user may use a machine-readable medium to open/unlock one of their allocated storage spaces 2. Once the allocated storage space 2 is closed/locked, the Consumer App may then prompt the user to collect their goods from a subsequent allocated storage space by displaying the subsequent allocated storage space on the display screen of the personal communications device as shown in Figs. 7b & 7c. Optionally, or additionally, the mobile app may prompt the user to collect their goods from a subsequent allocated storage space by utilising an alternative guidance means, as described above.

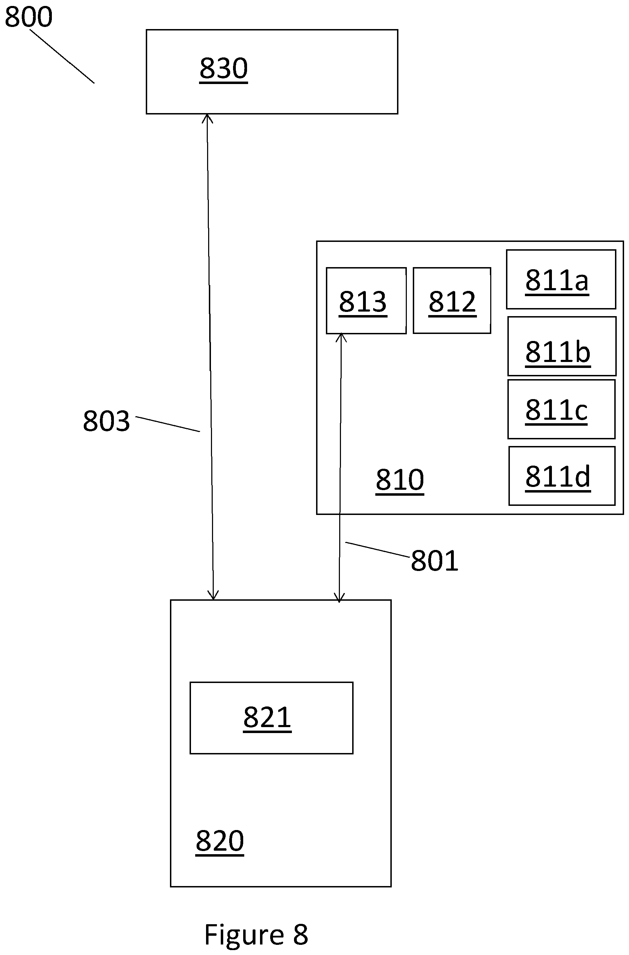

Figure 8 shows a system 800 according to an embodiment of the invention. The system 800 is configured to perform a method according to an embodiment of the invention as described below. The system 800 may be used to provide data to an electronic device, such as the personal communications device 230, of a user when the user of a storage apparatus collects goods of an order stored in the storage apparatus.

The system 800 comprises a storage apparatus 810 such as described above, a mobile device 820 and a computer server 830. The mobile device 820 may be the personal communications device 230 of the user, which is provided with data when the user of the storage apparatus collects the goods of the order stored in the storage apparatus 810.

The storage apparatus 810 may be the storage installation of Figure 1 or the locker bank of Figure 2. The storage apparatus 810 is associated with an identifier. The identifier enables the storage apparatus 810, from which the user wishes to collect goods from, to be identified. When the user places the order for collection, the user identifies the storage apparatus 810 from which they wish to collect the goods. The identifier may be at least one of an identification number, identification name tag and coordinates. However, other types of identifier may be envisaged.

The storage apparatus 810 comprises a plurality of lockable storage compartments 811a, 811b, 811c, 811d, a memory unit 812 and a communication unit 813. The user may collect the goods of the order from the plurality of lockable storage compartments 811a, 811b, 811c, 811d. The lockable storage compartments 811a, 881b, 811c, 811d may be the lockable storage spaces 2 described above. Although the storage apparatus 810 is depicted in Figure 8 as comprising four lockable storage compartments, the storage apparatus 810 may comprise any number of lockable storage compartments.

The memory unit 812 may be configured to store information. The memory unit 812 may comprise a ROM and/or RAM. The memory unit 812 may store data received from any component of the system 800 and/or an external computer system. The received data to be stored may comprise at least one of: digital media, order information, compartment allocation information and user information. The memory unit 812 may also store data directly inputted into the storage apparatus 810 via an input device (not illustrated) associated with the storage apparatus 810.

The communication unit 813 of the storage apparatus 810 is configured to wirelessly communicate with at least one other device. The at least one other device may be any component of the system 800 and/or an external computer system. In particular, the communication unit 813 is arranged to wirelessly communicate with the at least one other device. The wireless communication 801 is according to a local wireless communication protocol. The local wireless communication protocol may be any communication protocol configured to transmit and receive data over a relatively short range, such as for example up to 200m or up to 100m, hence being termed a local communication protocol. Thus, the at least one other device with which the communication unit 813 communicates is located at or relatively close to the storage apparatus 810.

For example, the local wireless communication protocol may be at least one of Wi-Fi, Bluetooth, Near-field communication (NFC) and Radio-frequency identification (RFID). It will be appreciated that this list of protocols is not exhaustive and other types of local wireless communication protocol may be used. In some embodiments, a short-range cellular communication protocol may be used, such as a 4G or 5G picocell, for example.

In some embodiments, when the local wireless communication protocol is Wi-Fi, the communication unit 813 may host the Wi-Fi connection, such as a Wi-Fi access point or hotspot. For example, in some embodiments, the communication unit 813 may act as modem or router for the wireless communication protocol.

The communication unit 813 may be configured to receive data which is then stored in the memory unit 812. The communication unit 813 may be configured to transmit data stored in the memory unit 812 to other components of the system 800 or an external computer system.

The system 800 comprises the mobile device 820 associated with the user. The user may use the mobile device 820 as a computing device to place the order for collection. The order may be transmitted from the mobile device 820 to the computer server 830 using communication channel 803. The mobile device 820 may, in some embodiments, be a mobile phone, tablet or smart watch. However, it will be appreciated that this list is not exhaustive and other types of mobile devices that can be associated with a user may also be envisaged.

The mobile device 820 comprises a display device 821. The display device 821 is configured to display information to the user. The display device 821 may be a display screen or touch screen.

In other embodiments, the user may place the order using a computing device that is not the mobile device 820. The computing device may be used by the user to place the order and may transmit the order and the identifier associated with the storage apparatus 810 to the computer server 830. For example, the computing device may be a desktop computer, tablet, mobile phone or smartwatch. It will be appreciated that this list is not exhaustive and other types of remote communications devices that can be associated with a user may also be envisaged.

As discussed above, the system 800 comprises a computer server 830. The computer server 830 may be located at a remote location from the storage apparatus 810. The computer server 830 may be part of the central control system 101 of Figure 4. The computer server 830 may be implemented on multiple processing units located at the same location or distributed across multiple locations, such as part of a cloud computing service.

The computer server 830 may comprise a storage device (not illustrated) for storing information. The data storage device may comprise cloud storage, for example the cloud storage 240 of Figure 5. Alternatively or in addition, the data storage device may be located in a supermarket or at a delivery centre, or locally within the storage apparatus 810. The computer server 830 may be configured to transmit and/or receive the information to/from other components of the system 800 and external computer systems.

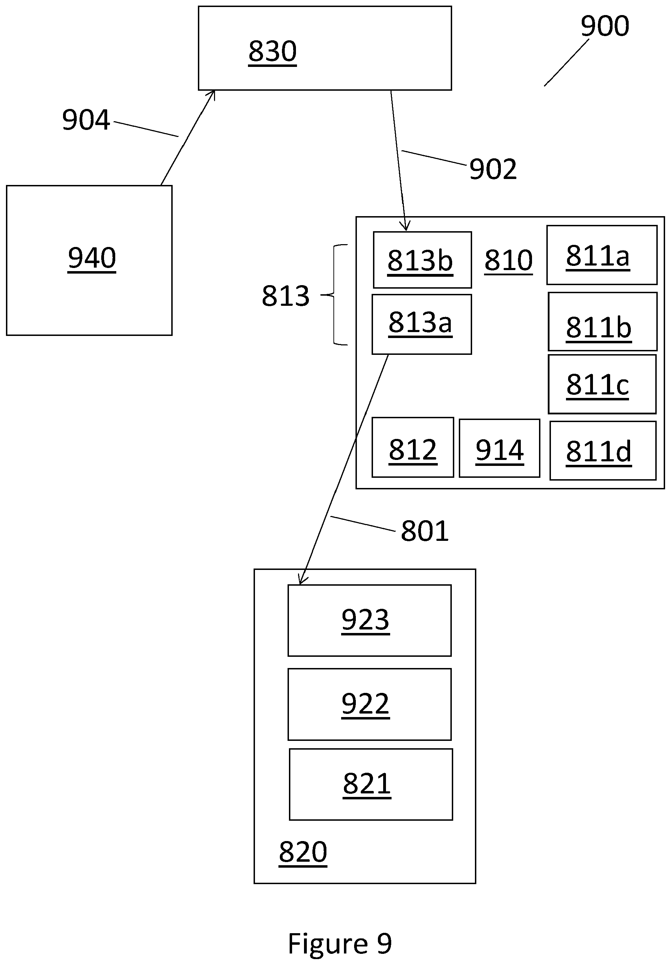

Figure 9 shows a system 900 according to an embodiment of the invention. The system 900 is configured to perform a method according to an embodiment of the invention as described below. In particular, the system 900 illustrates the system of Figure 8 being used to receive digital media from a computer 940 and transmit the digital media to the mobile device 820 via the storage apparatus 810.

The storage apparatus 810 comprises a processor 914 in addition to a plurality of lockable storage compartments 811a, 811b, 811c, 811d, a memory unit 812 and a communication unit 813. The processor 914 may operatively execute computer-readable instructions which may be stored in the memory unit 812.

As illustrated in Figure 9, the communication unit 813 of the storage apparatus 810 may comprise a first communication unit 813a and a second communication unit 813b. The first communication unit 813a may be configured to communicate with the mobile device 820 using the wireless communication 801 according to a local wireless communication protocol.

The second communication unit 813b may be configured to communicate with at least one other device using a second type of long-range communication 902. The second type of communication 902 may be a wired or a wireless communication. The second communication unit 813b may be configured to communicate with the computer server 830 over a communication channel which may be at least partly wireless i.e. wireless for at least part of its length. For example, the second type of communication 902 may be an Ethernet or cellular connection, such as 3G, 4G or 5G. The communication unit 813b may be configured to transmit and receive data over a communication channel having relatively long range, which may be wired communication over at least a part of its length. Thus, the at least one other device with which the communication unit 813b communicates may located at a remote location to the storage apparatus 810. The range of the second type of communication 902 may be longer than the range of the wireless communication 801. The second communication unit 813b may receive the information to be stored in the memory unit 812 via the second type of communication.

In some embodiments, the storage apparatus 810 is configured to operate as both an access point in a first Wi-Fi network and a client device in a second Wi-Fi network. For example, when the wireless communication 801 is the first Wi-Fi network, the storage apparatus 810 operates as an access point for the mobile device 820.

In contrast, when the second type of communication 902 is the second Wi-Fi network, the storage apparatus 810 operates as a client device. The second Wi-Fi network may be part of a long-range communication network. For example, the second Wi-Fi network may be a first leg of a long-range communication, where the storage apparatus 810 operates as the client device to communicate with a fixed access point in the second Wi-Fi network and the fixed access point in the second Wi-Fi network may communicate with other devices to receive and/or transmit data onward via wired communication. The access point with which the storage apparatus communicates may be located in a building proximal to the storage apparatus.

In other embodiments, the first communication unit 813a and the second communication unit 813b may be implemented on an integrated communication unit.

Figure 9 illustrates the mobile device 820 of the system 900 according to an embodiment of the invention. The mobile device 820 is associated with the user and may comprise a communication module 923. The communication module 923 of the mobile device 820 may be arranged to communicate wirelessly with the storage apparatus 810 according to the local wireless communication protocol. The communication module 923 may also communicate with other components of the system 900 or external devices using another type of communication.

The mobile device 820 may comprise a memory module 922. The memory module 922 may be configured to store data. For example, the memory module 922 may store data received from the storage apparatus 810 via the wireless communication connection 801.

The computer server 830 of system 900 may be configured to communicate with the computer 940 via communication channel 904. The computer 940 may be a third-party computer located remote from the storage apparatus 810 or located substantially near to the storage apparatus 810. The computer 940 may be configured to communicate with at least one of: the computer server 830 and the storage apparatus 810. The computer 940 may transmit and receive data to/from the computer server 830 and/or the storage apparatus 810 using a short-range communication protocol or a long-range communication protocol.

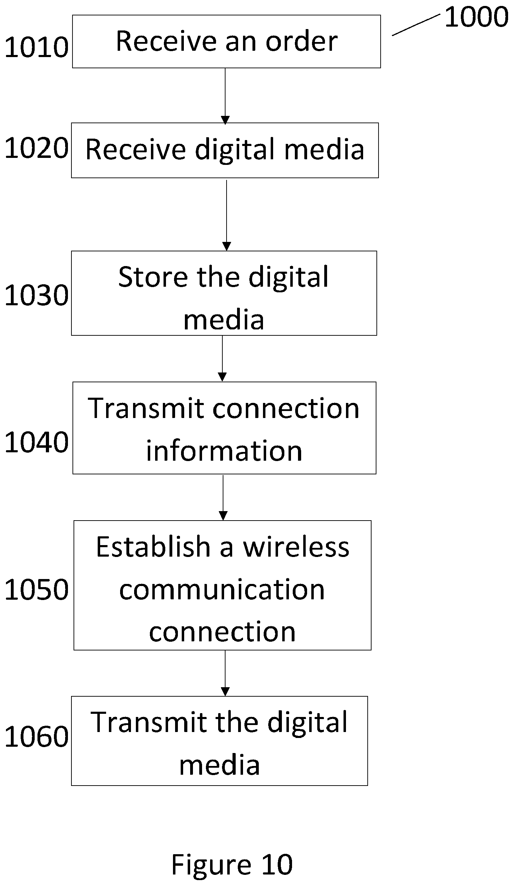

For example, the computer server 830 may receive digital media via the communication channel 904 from the computer 940. The computer server 830 may store the digital media in the cloud storage 240. The computer server 830 may transmit the digital media received from the computer 940 to the storage apparatus 810. The storage apparatus 810 may transmit the digital media received from the computer server 830 to the mobile device 820. A method according to an embodiment of the invention will be explained below in Figure 10 in more detail.

Figure 10 shows a block diagram showing a method 1000 according to an embodiment of the invention. The method 1000 may be performed by a system according to an embodiment of the invention, such as the system 800 described in Figure 8 or the system 900 described in Figure 9. The method 1000 is a computer-implemented method for use with a storage apparatus, such as storage apparatus 810. The method 1000 may be used to provide an electronic device of a user with data relevant to the location of the storage apparatus, as will be explained, when the user of the storage apparatus collects goods of an order stored in the storage apparatus.

Step 1010 of the method 1000 comprises receiving the order for goods. The order is received from a computing device associated with the user, such as the mobile device 820. The order may be received at a computer server, such as the computer server 830. The received order comprises an identifier associated with the storage apparatus. As discussed above, the identifier may be at least one of an identification number, identification name tag and coordinates. The method 1000 may further comprise receiving additional information from the computing device, such a user information.

Step 1020 of the method 1000 comprises receiving digital media. The digital media may be data partially indicative of the information to be provided to the user. For example, the digital media may be information concerning an offer at a store at which the storage apparatus is located, a voucher or advertisement. The digital media may be at least one of: an image, video and/or audio file. The digital media may comprise a machine-readable media, such as a barcode or QR code for display on a display device. However, other forms of digital media will be envisaged.

In some embodiments, the digital media is generated at the computer 940. In this case, the digital media may first be received by the computer server 830 from the computer 940 and forwarded by the computer server 830 to the storage apparatus 810.

In other embodiments, the digital media is generated at the computer server 830. In this case, the method 1000 may comprise a method step 1015 comprising generating digital media in dependence on received data. For example, the computer server 830 may receive data from the computer 940 which is indicative of contents of digital media, such as pricing information, and the computer server 830 may generate the digital media in dependence on the received data.

The method 1020 may further comprise receiving additional information from the computer server 830, such as location-specific information.

Step 1030 of the method 1000 comprises storing the digital media. The digital media is stored on a memory unit of the storage apparatus 810 associated with the identifier, such as the memory unit 812. The digital media may be stored in RAM or ROM.

Step 1040 of the method 1000 comprises transmitting connection information. The connection information is transmitted to a mobile device, such as the mobile device 830 or personal communications device 230. The connection information may be transmitted by the computer server, such as the computer server 830, to the mobile device 820. The connection information is information for establishing a wireless communication connection, such as wireless communication connection 801.

The connection information that is transmitted to the mobile device is determined based on the identifier transmitted to the computer server with the order. For example, when the user places the order and identifies a storage apparatus for goods collection, the computer server obtains, from a memory e.g. cloud storage 240, the connection information associated with the storage apparatus associated with the identifier and transmits said connection information to the mobile device.

The connection information may comprise security information to access the wireless communication connection. The connection information may comprise one or both of a service set identifier (SSID) and a passcode. The SSID and passcode may be used to access a WiFi connection.

The connection information may be transmitted to both the mobile device and the computing device if they are separate devices. The connection information may be associated with a user identity and may be accessible via a mobile application. For example, the user may be able to log on to a user account to prove their identity, using the mobile application on the mobile device in order to access the connection information. Alternatively, or in addition, the connection information may be stored on a memory of the mobile device.

Although steps 1020 and 1030 have been described as occurring before step 1040 in the flow chart of Figure 10, it will be appreciated that steps 1020 and 1040 could occur after step 1040. Similarly, steps 1020 and 1030 could occur before step 1010. Embodiments of the invention in which the method steps occur in a different order to that illustrated in Figure 10 and the corresponding description will be appreciated.

Method step 1050 comprises establishing a wireless communication connection. In particular, method step 1050 comprises establishing the wireless communication connection between the communication unit of the storage apparatus associated with the identifier and the mobile device. In particular, the wireless communication connection is established between the communication unit 813 of the storage apparatus 810 associated with the identifier and the mobile device 820 associated with the user.

As discussed above, the wireless communication connection has a short-range. Therefore, the wireless communication connection may only be established when a mobile device is present within a small distance from the storage apparatus. For example, when a user approaches the storage apparatus 810 with mobile device 820, the wireless communication connection 801 is established in dependence on the connection information, which is transmitted to the mobile device 820 by the computer server 830 in response to receiving the identifier associated with the storage apparatus when the order is placed.

The user may actively initiate a connection between the mobile device 820 and the communication unit 813 of the storage apparatus 810. The active initiation of the wireless communication connection may comprise the user being required to interact with the mobile device 820 to initiate the connection. For example, the user may be required to log on to the user account using the mobile application on the mobile device in order to access the connection information to establish the wireless communication connection. The mobile application may be Consumer App described in Figure 7. The connection information may be private, in that the user is not able to see the exact details of the connection information, or the connection information may be visible to the user.

Alternatively or additionally, the mobile device 820 may be configured to automatically establish the wireless communication connection 801. For example, the wireless communication connection may be established automatically when the user approaches the storage apparatus 810. When the wireless communication connection 801 is automatically established, the connection information may be private, in that the user is not able to see the exact details of the connection information, or the connection information may be visible to the user.

Method step 1060 comprises transmitting the digital media. The digital media may be transmitted from the storage apparatus 810 to the mobile device 820 once the wireless communication connection 801 has been established. The method 1060 may further comprise receiving additional information at the mobile device 820, from the storage apparatus 810. For example, the additional information may be information to guide a user to a lockable storage compartment of the storage apparatus, as described above in Figures 4 and 5. In this way the user may be guided by their mobile app on their personal communications device 230 or mobile device 820 to the goods of the order.

The method 1000 may further comprise displaying the digital media on a display device of the mobile device. The method 1000 may further comprise displaying the additional information on the display of the mobile device. In some embodiments, the digital media may be a file requiring an alternative output to a display device, such an audio file. Therefore, the method 1000 may further comprise outputting the digital media using an output device of the mobile device 820 or personal communication device 230 suitable for outputting the format of the digital media.

An advantage of the present invention is to selectively transmit digital media to mobile devices within a local area surrounding a storage apparatus. A further advantage of the present invention is to generate machine-readable digital media for transmitting to the storage apparatus.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A computer-implemented method for use with a storage apparatus, the storage apparatus comprising a plurality of lockable storage compartments, a memory unit for storing data and a communication unit for wireless communication according to a local wireless communication protocol, the method comprising:
receiving an order for goods from a computing device associated with a user, wherein receiving the order comprises receiving an identifier associated with the storage apparatus;
receiving, at the storage apparatus associated with the identifier, digital media from a computer server;
storing the digital media at the memory unit of the storage apparatus associated with the identifier;
transmitting connection information to a mobile device associated with the user, wherein the connection information is for establishing a wireless communication connection between the communication unit of the storage apparatus associated with the identifier and the mobile device associated with the user;
establishing, in dependence on the connection information, the wireless communication connection between the communication unit of the storage apparatus associated with the identifier and the mobile device; and
transmitting, via the wireless communication connection, the digital media from the storage apparatus to the mobile device for displaying the digital media on a display device thereof.

2. The method of claim 1, wherein the storage apparatus is selected by the user.

3. The method of any preceding claim, wherein the local wireless communication protocol is a Wi-Fi communication protocol.

4. The method of claim 3, wherein the connection information comprises an SSID and a passcode.

5. The method of any preceding claim, wherein the mobile device is the computing device.

6. A system comprising:
a storage apparatus associated with an identifier and comprising a plurality of lockable storage compartments, a memory unit and a communication unit for wireless communication according to a local wireless communication protocol,
a computing device associated with a user,
a mobile device associated with the user and comprising a display device, and
a computer server configured to:
receive an order for goods from the computing device, wherein receiving the order comprises receiving the identifier associated with the storage apparatus; and
transmit connection information to the mobile device, wherein the connection information is for establishing a connection between the communication unit of the storage apparatus associated with the identifier and the mobile device,
the storage apparatus configured to:
receive digital media from the computer server;
store the digital media on the memory unit;
establish, in dependence on the connection information, the wireless communication connection between the communication unit and the mobile device; and
when the wireless communication connection is established, transmit the digital media to the mobile device for displaying the digital media on a display device thereof.

7. Computer software which, when executed, is arranged to perform a method according to any of claims 1 to 5.
